Europäisches Patentamt

European Patent Office

Office européen des brevets

(19)

(11) Veröffentlichungsnummer: **0 158 852**
**A1**

(12) # EUROPÄISCHE PATENTANMELDUNG

(21) Anmeldenummer: **85103279.7**

(22) Anmeldetag: **21.03.85**

(51) Int. Cl.⁴: **B 01 L 3/02**
**G 01 F 11/08**

(30) Priorität: **22.03.84 DE 3410508**

(43) Veröffentlichungstag der Anmeldung:
**23.10.85 Patentblatt 85/43**

(84) Benannte Vertragsstaaten:
**AT BE CH DE FR GB IT LI LU NL SE**

(71) Anmelder: **Kernforschungsanlage Jülich Gesellschaft
mit beschränkter Haftung
Postfach 1913
D-5170 Jülich(DE)**

(72) Erfinder: **Webb, Leslie, Dr.
Zur Lohe 36
D-5160 Düren-Echtz(DE)**

(54) Serien-Abfüllgerät zum Befüllen der Becher einer Mikrobecherplatte.

(57) Ein Serien-Abfüllgerät (A+B) zum gleichzeitigen Befüllen der Mikrobecher (3), von Mikrobecherplatten (4), besteht aus einer Batterie von Vorratsbehältern (1), mit kapillarförmigen Auslaßenden (2), die etwa bis zum Mikrobecherboden reichen und in ihrer Höhe relativ zum Becherboden einstellbar sind, und einem Mittel zur Druckerhöhung über der Flüssigkeit in den Vorratsbehältern durch je eine elastisch nachgiebige Membran für die einzelnen Vorratsbehälter. Vorzugsweise werden diese Mittel zur Druckerhöhung durch Gummikappen (8), gebildet, die auf einer entsprechenden Batterie kleiner Zusatzbehälter (7) sitzen, welche mit den Vorratsbehältern über Schläuche (11), verbunden sind. Diese Gummikappen werden gemeinsam durch eine Druckplatte (9), mit den Gummikappen gegenüberstehenden Noppen betätigt. Das Befüllen der Mikrobecher erfolgt über die in der gewünschten Füllhöhe innerhalb der Becher angeordneten Auslaßenden durch einen kurzzeitigen Druck auf die Membran, woraufhin zunächst überschüssige Flüssigkeit in die Mikrobecher gelangt, deren Überschuß bei Nachlassen des Druckes auf die Membran in die Vorratsbehälter zurückgesaugt wird.

./...

EP 0 158 852 A1

Croydon Printing Company Ltd

FIG. 1

Kernforschungsanlage Jülich
Gesellschaft mit beschränkter Haftung

Serien-Abfüllgerät zum Befüllen der Becher
einer Mikrobecherplatte

---

Die Erfindung bezieht sich auf ein Serien-Abfüllgerät zum gleichzeitigen Befüllen der Mikrobecher einer Mikrobecherplatte mit einer der Mikrobecherzahl entsprechenden Anzahl von Vorratsbehältern, die mit einer Batterie von auf gleichem Niveau endenden Auslaßröhrchen in Verbindung stehen, welche den Mikrobechern fest zugeordnet sind, sowie mit einer Anordnung zur Erhöhung des Druckes über der Flüssigkeit in den Vorratsbehältern.

Ein solches, auch als "Dispensiergerät" bezeichnetes Gerät wird von der Fa. Dynatech Produkte AG, Kloten (Schweiz) unter der Bezeichnung "AM 160 MIC-2000" auf den Markt gebracht, das zum Befüllen der 96 Mikrobecher einer als Microtiter$^{(R)}$-Platte bezeichneten Mikrobecherplatte dient. Es umfaßt ein Reagenzglasgestell mit 96 offenen Reagenzgläsern, von denen Heber zu einem Dispensierkopf mit den 96 Mikrobechern der Mikrobecherplatte gegenüberstehenden Auslaßöffnungen reichen. Die Reagenzgläser befinden sich in einem abgeschlossenen Raum, aus dem die Heber abgedichtet herausgeführt sind und in den eine Leitung führt, die von einem Kompressor herkommt. Diese Leitung umfaßt einen Regulator und dient zum Erhöhen des Druckes über den Röhrchen.

- 2 -

Durch gesteuerte Druckerhöhung kann Flüssigkeit aus den Reagenzgläsern über die Heber
zum Dispensierkopf gedrückt werden. Der Dispensierkopf umfaßt 96 einzelne Ventile, die gleichzeitig durch eine gesonderte Steuerung geöffnet
und wieder geschlossen werden, wodurch die
gewünschte Flüssigkeitsmenge in die Mikrobecher entlassen wird.

Dieses am Markt erhältliche Gerät ist relativ
teuer und die Befüllsteuerung über den Luftdruck
und Ventile kompliziert.

Ziel der Erfindung ist daher ein relativ einfaches, billig zu erstellendes Abfüllgerät,
das trotzdem mit befriedigender Genauigkeit
arbeitet.

Das zu diesem Zweck entwickelte erfindungsgemäße Abfüllgerät der eingangs genannten
Art ist dadurch gekennzeichnet, daß der Abstand
der unteren Enden der Auslaßröhrchen relativ
zum Becherboden einstellbar ist und daß als
Mittel zur Druckerhöhung über der Flüssigkeit
mit jedem Vorratsbehälter je eine elastisch
nachgiebige Membran luftdicht verbunden ist.

Bei diesem Gerät wird durch Druckerhöhung
über der Flüssigkeit in den Vorratsbehältern

- 3 -

zunächst ein überschüssiges Volumen Flüssigkeit in die Mikrobecher entlassen, wovon jedoch bei Nachlassen des Druckes auf die elastische Membran soviel wieder in die Vorratsbehälter zurückgesaugt wird, bis die Auslaßenden der Vorratsbehälter nicht mehr in die Flüssigkeit in den Mikrobechern eintauchen.

Diese Anordnung setzt selbstverständlich eine Horizontalaufstellung der Mikrobecherplatte und Einheitlichkeit sowohl der Mikrobecher als auch ihrer Bodentiefe voraus und eine entsprechende Horizontalausrichtung der Auslaßenden der Vorratsbehälter.

Vorzugsweise wird die Druckerhöhung über Gummikappen erreicht, die auf den im allgemein rohrförmigen Vorratsbehältern selbst oder auf damit verbundenen Zusatzbehältern vorgesehen werden und die gemeinsam durch eine zugeordnete vertikal bewegliche Horizontalplatte eingedrückt werden. Zu diesem Zweck hat die Platte vorzugsweise den Gummikappen gegenüberstehende Noppen, durch welche die erforderliche Volumenverminderung bzw. Druckerhöhung mit sehr viel geringerem Kraftaufwand erreicht werden kann. Die Gummikappen sind insbesondere halbkugelförmig aus gut elastischem Material, das gut eindrückbar

- 4 -

ist, aber dessen Form eine ausreichende
Rückstellkraft gewährleistet, so daß
eine ausreichende Volumenverminderung
mit mäßigem Kraftaufwand erzielt werden
kann, die jedoch bei Nachlassen der Krafteinwirkung von allein wieder rückgängig
gemacht wird, trotz des zusätzlichen
Gewichts der Flüssigkeitssäule in den
Vorratsbehältern.

Um trotz der räumlich gedrängten Anordnung
der über den Mikrobechern vorgesehenen
Auslaßenden der Vorratsbehälter in letzteren
möglichst große Vorratsmengen unterbringen
zu können, werden diese mit den kanülenartig
ausgebildeten Auslaßenden über Schlauchstücke
verbunden und gespreizt angeordnet. Für
die gespreizte Anordnung werden rohrförmige
Vorratsbehälter mit entsprechendem Querschnitt
zweckmäßigerweise unten über eine gewisse
Länge durch engere Röhrchen verlängert,
die einen Übergang von der gedrängten
Anordnung der Kapillarröhrchen zur gespreizten
Anordnung der Vorratsbehälter gewähren.

Zur Unterbringung möglichst großer Vorratsmengen wären auch konisch ausgebildete
Vorratsbehälter zweckmäßig.

Weitere Besonderheiten gehen aus den
Unteransprüchen und der nachfolgenden
Beschreibung eines Ausführungsbeispiels

- 5 -

hervor. Diese Beschreibung nimmt Bezug
auf die angefügten Zeichnungen; es zeigen
schematisch:

Figur 1    eine Ausführungsart des Gerätes
           mit Zusatzbehältern;

Figur 2    einen einzelnen Vorratsbehälter
           aus diesem Gerät;

Figur 3    veranschaulicht den Abfüllvorgang;

Figur 4    zeigt Einzelheiten des Geräts
           gemäß Figur 1 und

Figur 5    eine auf Stoß dichtende Verschlußkappe
           der Vorratsbehälter mit Klemmbügel.


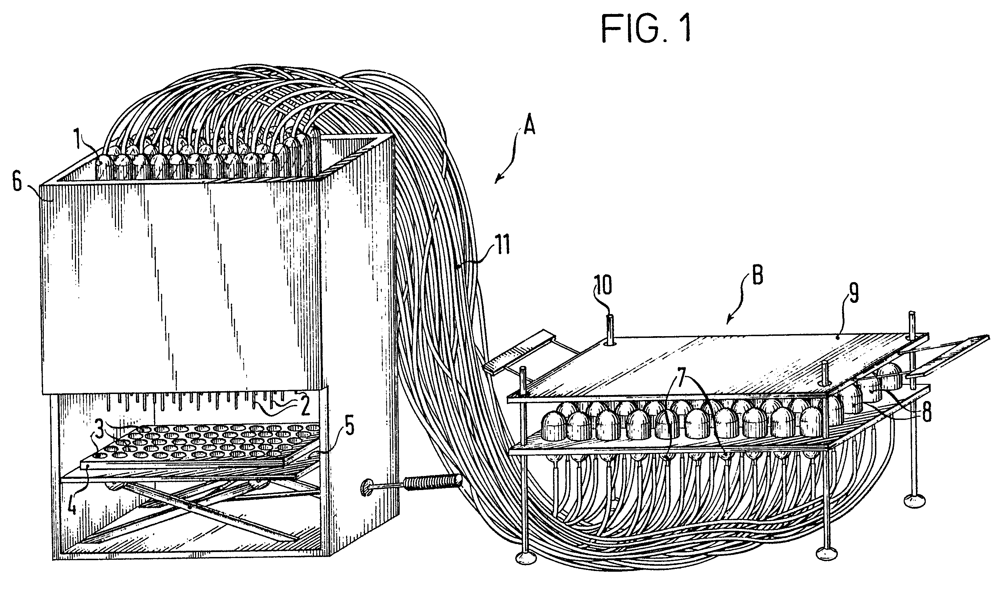

Gemäß Figur 1 besteht das Abfüllgerät
im wesentlichen aus einem Teil A mit
Vorratsbehältern 1 mit kanülenartigen
Auslaßenden 2 über den Mikrobechern 3
einer Mikrobecherplatte 4 auf einem in
seiner Höhe verstellbaren Tisch 5 innerhalb
eines Rahmens oder Stativs 6.


Mit dem Teil A verbunden ist der Teil B,
der durch eine Batterie von Zusatzbehältern 7
mit Gummikappen 8 unter einer Druckplatte 9
innerhalb eines Stativs 10 gebildet wird.
Die oberen Enden der Behälter 1 sind
jeweils einzeln über einen Schlauch 11
mit einem Zusatzbehälter 7 verbunden.


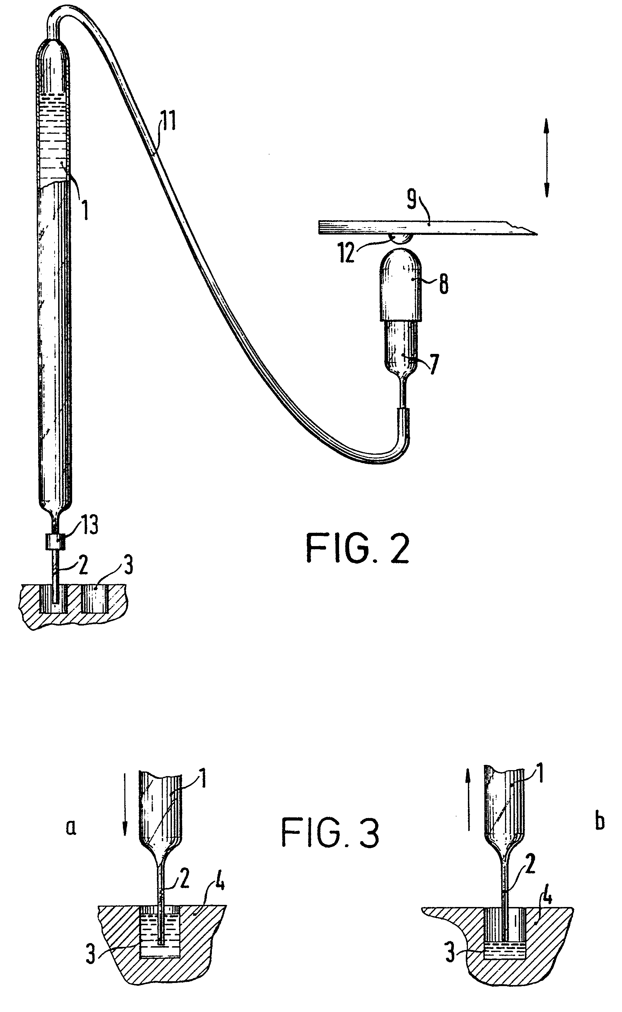

Figur 2 zeigt einen einzelnen Vorratsbehälter 1, der über den Schlauch 11

- 6 -

mit dem Zusatzbehälter 7 mit Kappe 8
unter der Druckplatte 9 verbunden ist.
Die Platte 9 hat der Gummikappe 8 gegenüberstehend eine Noppe 12, und die Kapillare 2 ist mit dem Vorratsbehälter über
ein Schlauchstück 13 verbunden.

Figur 3 veranschaulicht den Abfüllvorgang:
Durch Eindrücken der Gummikappe wird
über der Flüssigkeit im Vorratsbehälter 1
ein Überdruck erzeugt, der Flüssigkeit
durch das Kapillarröhrchen 2 in den Becher 3
der Mikrobecherplatte 4 in überschüssiger
Menge treibt (Figur 3a). Wenn die Gummikappe
wieder freigegeben wird, entsteht über
der Flüssigkeit ein Unterdruck, so daß
Flüssigkeit in das Vorratsgefäß zurückgesaugt
wird, bis das Auslaßende des Vorratsbehälters
nicht mehr in Flüssigkeit taucht. Die
Höhe des Auslaßendes über dem Mikrobecherboden bestimmt mithin die Füllmenge des
Mikrobechers. Diese Höhe ist einstellbar,
und zwar insbesondere durch Veränderung
der Höhe des Auflagetisches 5 für die
Mikrobecherplatte mit Hilfe eines üblichen
Scherenmechanismus'.

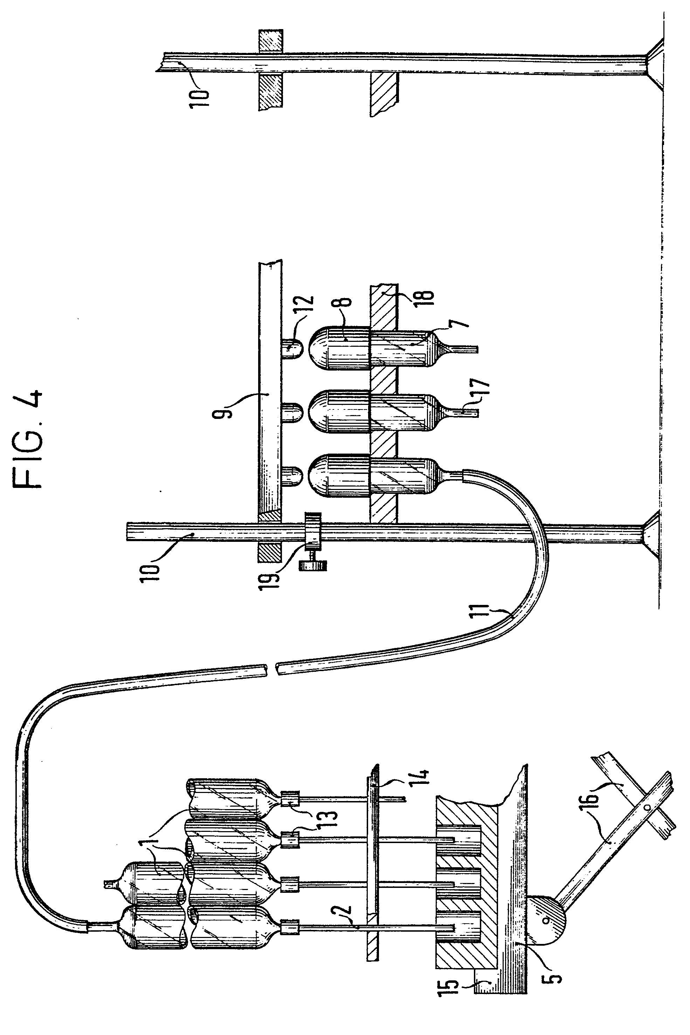

Figur 4 zeigt weiteres Detail der Anordnung:
Danach sind die aus Edelstahl gefertigten
Kapillarröhrchen 2 in einem gemeinsamen
Rahmen 14 gehaltert, der in eine Schiene

- 7 -

des Rahmens oder Stativs 6 von Teil A eingreift (nicht dargestellt). Der Tisch 5 für die Mikrobecherplatte 4 hat einen Anschlag 15 und bewegt sich ebenfalls auf einer Schiene des Rahmens 6 (nicht dargestellt). Die Höhenverstellung erfolgt über die Hebevorrichtung 16.

Die Vorratsbehälter 1 sind über Silikonschläuche 11 mit den unteren Enden 17 der Zusatzbehälter 7 verbunden, die in einem mit dem Stativ 10 verbundenen Rahmen 18 gehaltert sind. Ein einstellbarer Anschlag 19 hemmt die (üblicherweise von Hand erfolgende) Abwärtsbewegung der mit Noppen 12 versehenen Platte 9, die im Stativ 10 geführt ist.

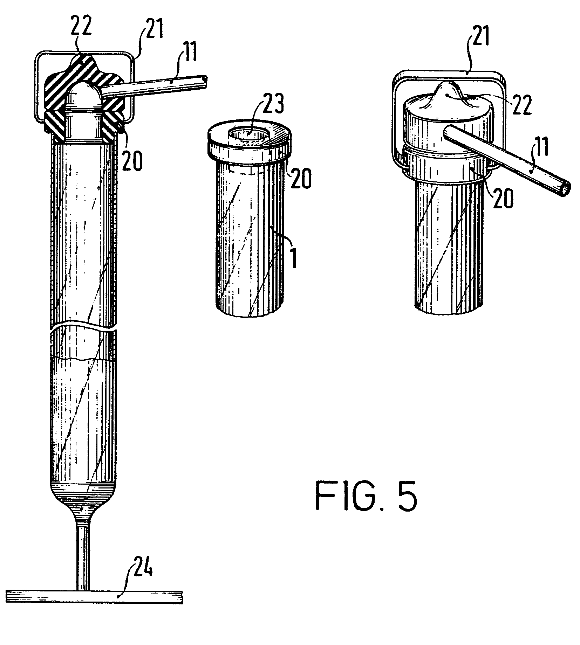

Vorzugsweise ist das obere Ende der Vorratsbehälter nicht, wie in Figur 4 dargestellt, verjüngt, sondern einfach abgeschnitten, wie in Figur 5 angedeutet, und trägt dann eine Manschette bzw. einen Flansch 20 mit einem Klemmbügel 21, der über eine auf Stoß abdichtende Verschlußkappe 22 greift und diese gegen den Flansch 20 (ggf. über einen Silikon-Dichtring) preßt. In dieser Kappe 22 mündet der Schlauch 11, der zum Zusatzgefäß 7 führt. Diese in Figur 5 gezeigte Anordnung erleichtert das Füllen der Vorratsbehälter 1 mit Flüssigkeit über die Öffnung 23 der Man-

- 8 -

schette 20 mit Hilfe einer fein ausgezogenen
Pipette (Enzympipette). Für den Einfüllvorgang werden die unteren Enden der
Vorratsbehälter durch eine dagegengepreßte
abdichtende Platte 24 verschlossen.

Das vorstehend beschriebene Gerät ist
einfach und preisgünstig realisierbar.
Der Teil A umfaßt keine bewegten Teile
und kann daher ohne weiteres im Autoklaven
sterilisiert werden. Zwischen A und B
kann ein Sterilfilter eingesetzt werden.
Der Flüssigkeitsvorrat in den Behältern
reicht für das Befüllen von ca. 120 Mikrobecherplatten aus.

Mikrobecherplatten werden mit praktisch
gleichbleibenden Abmessungen hergestellt
und angeboten (allein schon wegen der
üblichen Zusatzgeräte), so daß eine gleichbleibende Abfüllgenauigkeit des vorliegenden
Geräts auf zumindest $\pm$ 10 % gewährleistet
erscheint.

Patentansprüche

1. Serien-Abfüllgerät zum gleichzeitigen Befüllen der Mikrobecher einer Mikrobecherplatte mit einer der Mikrobecherzahl entsprechenden Anzahl von Vorratsbehältern, die mit einer Batterie von auf gleichem Niveau endenden Auslaßröhrchen in Verbindung stehen, welche den Mikrobechern fest zugeordnet sind, sowie mit einer Anordnung zur Erhöhung des Druckes über der Flüssigkeit in den Vorratsbehältern,

d a d u r c h   g e k e n n z e i c h n e t ,

daß der Abstand der unteren Enden der Auslaßröhrchen (2) relativ zum Becherboden einstellbar ist und daß als Mittel zur Druckerhöhung über der Flüssigkeit mit jedem Vorratsbehälter (1) je eine elastische nachgiebige Membran (8) luftdicht verbunden ist.

2. Abfüllgerät nach Anspruch 1,

d a d u r c h   g e k e n n z e i c h n e t ,

daß das Mittel zur Druckerhöhung durch Gummikappen (8) auf den Vorratsbehälterenden oder auf Zusatzbehältern (7), deren Innenraum mit dem Innenraum der Vorrats-behälter (1) verbunden ist, und eine gegen die Gummikappen bewegliche Platte (9) gebildet wird.

3. Abfüllgerät nach Anspruch 2,

d a d u r c h   g e k e n n z e i c h n e t ,

daß die Platte (9) den Gummikappen (8)

0158852

- 2 -

gegenüberstehend mit Noppen (12) versehen ist.

4. Abfüllgerät nach einem der vorangehenden Ansprüche, **d a d u r c h   g e k e n n z e i c h n e t ,** daß die Auslaßenden durch in einem Rahmen (14) gehalterte Kapillaren (2) gebildet werden, mit denen unten zur Kapillare ausgezogene rohrförmige Vorratsbehälter (1) über nachgiebige Schlauchstücke (13) verbunden sind.

5. Abfüllgerät nach Anspruch 2, **d a d u r c h   g e k e n n z e i c h n e t ,** daß die Zusatzbehälter (7) mit oben stumpf endenden Vorratsbehältern (1) durch Schläuche (11) verbunden sind, die in eine abgedichtet aufgesetzte Verschlußkappe (22) der Vorratsbehälter (1) einmünden.

6. Abfüllgerät nach Anspruch 5, **d a d u r c h   g e k e n n z e i c h n e t ,** daß die oberen Enden der Vorratsbehälter (1) in einem Flansch (20) mit Klemmbügel (21) enden, der über die mit Gegenflansch versehene Verschlußkappe (22) greift.

7. Abfüllgerät nach einem der vorangehenden Ansprüche, **g e k e n n z e i c h n e t   d u r c h** einen mit Anschlägen (15) für die Mikro-

- 3 -

becherplatte (4) versehenen Auflagetisch
(5) mit scherenförmiger, justierbarer
Höhenverstellung (16) zur Veränderung
des Abstandes der Auslaßenden (2) der
Vorratsbehälter (1) relativ zum Mikrobecherboden.

8.  Abfüllgerät nach einem der vorangehenden
Ansprüche,
g e k e n n z e i c h n e t   d u r c h
eine unter die Auslaßenden (2) der Vorratsbehälter (1) zu bringende, die Enden abdichtende Platte (24).

# FIG. 1

FIG. 2

FIG. 3

# FIG. 4

- 414 -

FIG. 5

**Europäisches Patentamt**

**EUROPÄISCHER RECHERCHENBERICHT**

0158852

Nummer der Anmeldung

EP 85 10 3279

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | FR-A-2 317 634 (DYNATECH) <br> * Seite 12, Zeile 23 - Seite 13, Zeile 35 * <br><br> --- | 1 | B 01 L 3/02 <br> G 01 F 11/08 |
| Y | US-A-3 661 189 (BOWSER et al.) <br> * Spalte 3, Zeile 63 - Spalte 4, Zeile 20 * <br><br> ----- | 1 | |

**RECHERCHIERTE SACHGEBIETE (Int. Cl.4)**

B 01 L
G 01 N
G 01 F

Der vorliegende Recherchenbericht wurde für alle Patentansprüche erstellt

| Recherchenort <br> DEN HAAG | Abschlußdatum der Recherche <br> 01-07-1985 | Prüfer <br> VAN OORSCHOT J.W.M. |
|---|---|---|